(19) Europäisches Patentamt
European Patent Office
Office européen des brevets

(11) **EP 0 838 674 A2**

(12) **EUROPÄISCHE PATENTANMELDUNG**

(43) Veröffentlichungstag:
**29.04.1998 Patentblatt 1998/18**

(51) Int Cl.6: **G01M 13/04**, G01H 1/00

(21) Anmeldenummer: 97118335.5

(22) Anmeldetag: **22.10.1997**

(84) Benannte Vertragsstaaten:
**AT BE CH DE DK ES FI FR GB GR IE IT LI LU MC NL PT SE**

(30) Priorität: **23.10.1996 DE 19643686**

(71) Anmelder: **Schenck Process GmbH**
**64293 Darmstadt (DE)**

(72) Erfinder: **Zöller, Rolf**
**64293 Darmstadt (DE)**

(74) Vertreter: **Sievers, Uwe, Dipl.-Ing. et al**
**Schenck Process GmbH,**
**Landwehrstrasse 55**
**64293 Darmstadt (DE)**

(54) **Verfahren zur Auswertung von Schwingungssignalen technischer Systeme**

(57) Es wird ein Auswertungsverfahren für Schwingungssignale vorgeschlagen, wobei das Schwingungssignal x(t) mittels einer eine komplexe Musterfunktion enthaltenden Transformationsfunktion transformiert wird, wobei die Transformationsfunktion eine komplexes Skalarproduktbildung vorsieht, um Kurzzeitereignisse aus dem Gesamtschwingungssignal detektieren zu können.

Fig. 1

## Beschreibung

Die Erfindung betrifft ein Verfahren zur Auswertung von Schwingungen technischer Systeme. Solche Verfahren werden insbesondere zur Überwachung von Maschinen oder zur Überprüfung von Baugruppen eingesetzt. Zur Auswertung der Schwingungssignale werden bislang vorwiegend die Fourier-Transformation oder die Fast-Fourier-Transformation verwendet.

Mittels dieser Methoden ist es kaum oder nur in Verbindung mit sehr hoher, insbesondere analoger, Signalvorverarbeitung möglich, Kurzzeitereignisse, wie sie beispielsweise beim Überrollen einer schadhaften Wälzlagerstelle entstehen, zu erfassen, zu erkennen und zu bewerten. Diese Kurzzeitereignisse führen zu gedämpften Schwingungsvorgängen, die der regulären Maschinendynamik überlagert sind, und dies eventuell sogar mit deren Frequenz. Erschwerend wirkt sich darüberhinaus das regelmäßig vorhandene Rauschen in den Signalen aus. Durch den meist sehr niedrigen Energiegehalt sind diese Kurzzeitereignisse auch im Leistungsspektrum nicht zu identifizieren.

Der Erfindung liegt daher die Aufgabe zu Grunde, ein Verfahren zur Auswertung von Schwingungssignalen technischer Systeme anzugeben, welches bei geringem Aufwand ein sicheres Erkennen und Klassifizieren von Störungen ermöglicht, denen Systemschwingungen und eventuell Grundrauschen überlagert sind.

Diese Aufgabe wird erfindungsgemäß dadurch gelöst, daß zunächst mit einem Aufnahmemittel das Schwingungssignal des betriebenen Systems erfaßt wird, das Signal anschließend mittels einer Transformationsfunktion transformiert wird, die eine komplexe Musterfunktion enthält, welche aus der Impulsantwort des Systems gebildet ist, wobei zur Bewertung der Ähnlichkeit zwischen dem Schwingungssignal und der Musterfunktion die komplexe Musterfunktion durch eine komplexe Skalarproduktbildung mathematisch mit dem Schwingungssignal verknüpft wird, und aus dem Ergebnis der Transformation ein Schadensmerkmal des Systems ableitbar ist.

Durch die erfindungsgemäße Lösung kann quasi ohne Signalvorverarbeitung ein einzelnes oder auch periodisch oder aperiodisch auftretendes schockerregtes Kurzzeitereignis detektiert werden.

Die Musterfunktion, die zur Transformation benötigt wird, kann, beispielsweise aus Erfahrungswerten für bekannte ähnliche Systeme, vorab bekannt sein; sie kann jedoch auch in einer Lernphase durch impulsartige Einwirkung auf das System, Aufnahme und Auswertung des Signals der dadurch bewirkten gedämpften Schwingung gewonnen werden. Die impulsartige Einwirkung auf das System kann dabei, falls der Zeitpunkt seines Auftretens bekannt ist, der gesuchte Schaden selbst sein; die Lernphase wird dann mit Systemen durchgeführt, welche bereits bekannte Schäden aufweisen.

Eine Bestimmung der Musterfunktion ist jedoch auch durch eine impulsartige externe Einwirkung möglich. Diese letztgenannte Lernphase bei externer Einwirkung kann auch während des Betriebs des Systems durchgeführt werden.

Gemäß einer weiteren Ausbildung des erfindungsgemäßen Verfahrens ist jedoch vorgesehen, daß die Musterfunktion bei Stillstand des Systems durch ausschließlich externe Einwirkung gewonnen wird. Diese externe Einwirkung geschieht insbesondere durch Anschlagen des Systems.

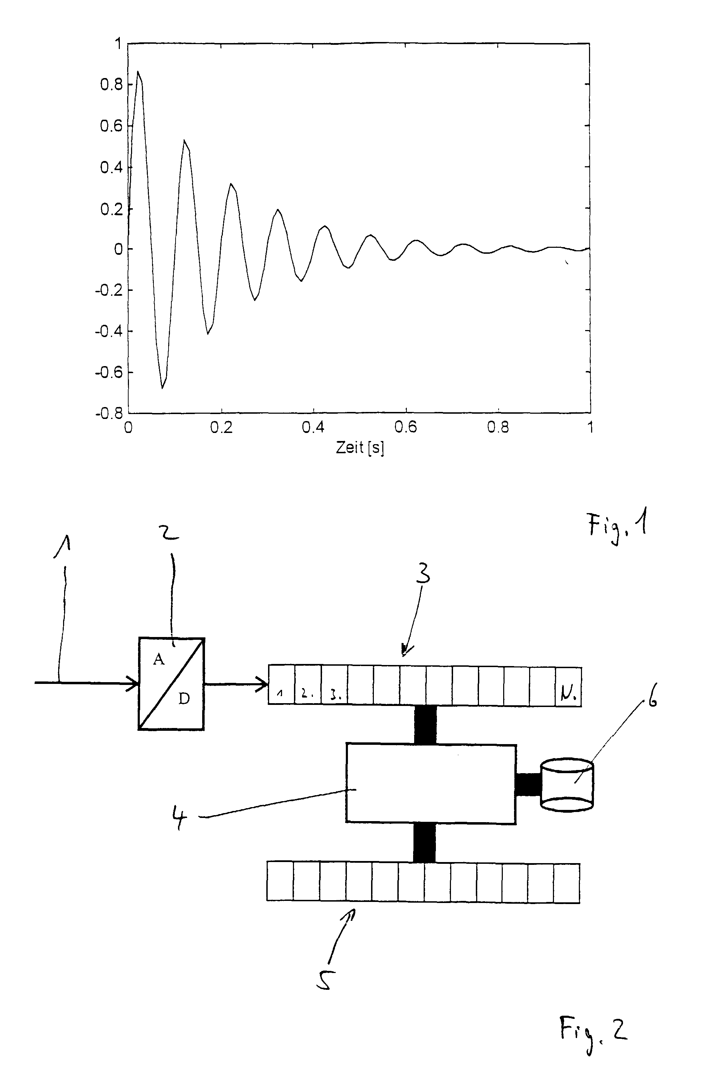

Im folgenden wird die Funktionsweise der Erfindung anhand der Figuren 1 bis 3 näher beschrieben. Die durch die Erfindung nachzuweisenden Kurzzeitereignisse, die insbesondere durch Schäden, Einbaufehler oder dergleichen bedingt sind, führen zu gedämpften mechanischen Schwingungen, die durch ihre Frequenz und ihre Güte gekennzeichnet sind. Die Güte der Schwingung ist durch die Anzahl der Schwingungen charakterisiert, nach denen die Amplitude auf 36 % ihres Maximalwertes gesunken ist. In Fig. 1 ist eine solche gedämpfte Schwingung mit einer Freqenz f von 10 Hz und eine Güte q von 2,2 dargestellt.

Eine solche gedämpfte Schwingung überlagert sich im Falle des Auftretens eines solchen, oben bereits erwähnten Kurzzeitereignisses, beispielsweise beim Überrollen einer schadhaften Stelle eines Wälzlagers, der Schwingung der betriebenen Maschine. Dem an einer betriebenen Maschine mit einem Schwingungsaufnehmer gemessenen Schwingungssignal überlagert sich zusätzlich noch das breitbandige Rauschen des Signals.

Zur Detektierung der Kurzzeitereignisse sollen nun solche gedämpften Schwingungen innerhalb des aufgenommenen Schwingungssignales erkannt werden. Gemäß der Erfindung wird hierzu eine komplexe Musterfunktion g (t) gebildet, die der oben erwähnten gedämpften Schwingung sowohl in der Frequenz als auch in der Güte ausreichend genau entspricht, um die Kurzzeitereignisse aus dem Gesamtschwingungssignal zeitlich genau lokalisieren zu können. Durch die Anpassung in Frequenz und Güte der gedämpften Schwingung, die experimentell durch Anschlagen des Systems erhalten werden kann oder bekannt ist, wird sichergestellt, daß gedämpfte Schwingungen mit anderer Frequenz und/oder Güte als der dem Schaden zugeordneten Impulsantwort das Erkennungsverfahren nicht beeinflussen. Das bedeutet, daß das erfindungsgemäße Verfahren robust gegen zusätzliche externe mechanische Anregung ist.

Die genannte Basisfunktion g (t) soll sozusagen ein Wellenpaket repräsentieren, das möglichst der gesuchten gedämpften Schwingung entspricht.

Erfindungsgemäß ist vorgesehen, daß die Musterfunktion

$$g(t) = \exp(-t^2/a^2 - j*2*PI*f_0*t/a)$$

ist. Dabei bedeutet t die Zeit, a ist ein von der Güte q der gedämpften Schwingung abhängiger Parameter, der insbesondere größer als $0{,}1q$ und kleiner $10q$ ist. j ist die imaginäre Einheit für die $j^2 = -1$ gilt; PI ist die Kreiszahl und $f_0$ ist möglichst gleich der Frequenz der gedämpften Schwingung.

Um nun die gesuchten Kurzzeitereeignisse aus dem gesamten aufgenommenen Schwingungssignal zu erkennen, sieht die Erfindung zur Analyse eine Berechnung einer Ähnlichkeitsfunktion des Gesamtschwingungssignales mit dem angepaßten Wellenpaket g(t) vor. Diese Transformation erfolgt durch eine sogenannte komplexes Skalarproduktbildung, wozu folgende Beziehung benützt wird:

$$F(tau) = INTEGRAL(x(t)*g(t-tau))dt,$$
$$o \rightarrow \infty$$

wobei x(t) das Gesamtschwingungssignal ist und g(t-tau) das oben bereits angegebene Wellenpaket darstellt. Durch diese Transformation erhält man zu jedem Zeitpunkt tau einen Funktionswert F, der die gesuchte Ähnlichkeit zwischen dem Gesamtschwingungssignal und dem möglichst genau der gesuchten gedämpften Schwingung entsprechenden Wellenpaket entspricht. An den Zeitpunkten des Schwingungsverlaufes, an denen die gedämpfte Schwingung, die durch das gesuchte Kurzzeitereignis ausgelöst ist, auftritt hat die Transformationsfunktion F(tau) eine große Amplitude, ansonsten wird die Amplitude nahezu 0 sein. Die Amplitude der Transformationsfunktion liefert daher nicht nur eine Zeitfunktion für das Auftreten des gesuchten Ereignisses, sondern der Betrag der Amplitude charakterisiert die Intensität der durch das gesuchte Kurzzeitereignis bewirkten Impulsanregung des Systems.

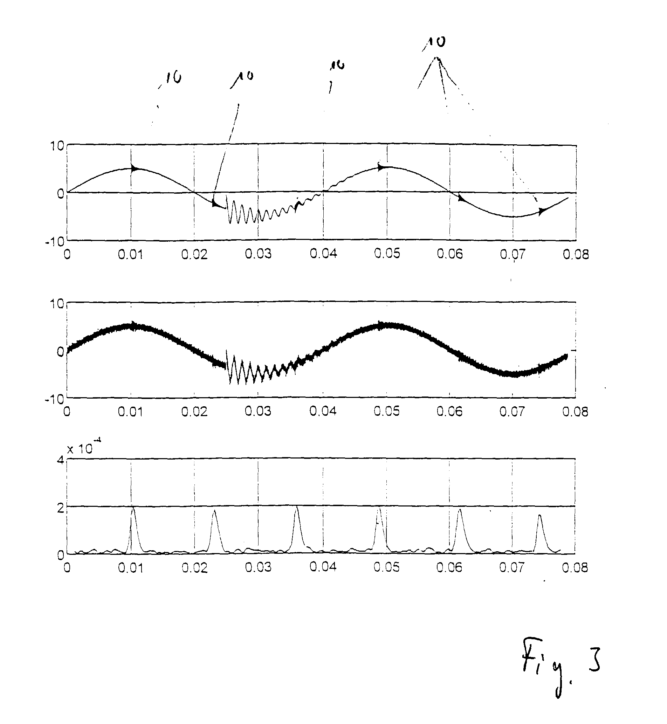

Die Durchführung des erfindungsgemäßen Verfahrens kann beispielsweise mit einer in Fig. 2 schematisch dargestellten Anordnung erfolgen. Das von einem nicht dargestellten Schwingungsaufnehmer erzeugte Gesamtschwingungssignal wird mittels der Verbindung 1 einem Analog/Digital-Wandler 2 zugeführt, der eine zeitdiskrete Abtastung mit einer Abtastfrequenz fa durchführt. Die abgetasteten Werte werden in einem Schieberegister 3 zwischengespeichert. Das Schieberegister 3 besitzt N Speicherzellen, wobei der aktuelle Abtastwert stets in der ersten Zelle gespeichert wird, wonach alle vorherigen Abtastwerte um eine Speicherzelle nach rechts verschoben werden. Die Anzahl N der Speicherzellen ist dabei so gewählt, daß mindestens eine gedämpfte Schwingung abgespeichert sein kann. Für viele praktische Anwendungen gilt der Zusammenhang:

$$N = 5*q*fa/f_0$$

Zu Zeitpunkten, die durch ein vielfaches von 1/fa gebildet, werden die komplexen Zahlenwerte der Musterfunktion g(t) mittels der Recheneinheit 4 berechnet und in einem digitalen Festwertspeicher 5 abgelegt. Dieser digitale Festwertspeicher besitzt ebensoviele Speicherzellen wie das Schieberegister 3. Die beiden Speichermedien 3 und 5 sind mit der Rechnereinheit 4 ebenso durch ein Bussystem verbunden wie das dritte Speichermedium 6. Die Rechnereinheit 4 führt die Transformation gemäß der oben genannten Formel F(tau) durch, wozu das Integral durch eine Summation über die Inhalte der Speicher 3 und 4 in eine diskrete Summe überführt wird.

Diese Summation erfolgt in festgelegten Zeitintervallen, die geringer oder gleich der Abtastzeit, also den Kehrwert der Abtastfrequenz, sind, damit die Transformationsfunktion eine ausreichende Zeitauflösung besitzt. Das Resultat der Transformation wird in dem dritten Speichermedium 5 abgelegt und kann anschließend auf geeignete Weise weiterverarbeitet werden.

Anhand von Fig. 3 wird die Erfindung am Beispiel einer praktischen Anwendung weiterverdeutlicht. Das mittlere Diagramm der drei übereinander angeordneten Signalverläufe stellt dabei das Gesamtschwingungssignal x(t) dar. Dieses enthält wie aus dem oberen Schaubild ersichtlich eine Sinusfunktion mit der Amplitude 5 und der Frequenz 25 Hz, welche die Grunddynamik einer Maschine repräsentieren soll. An den durch die Dreieckssymbole 10 dargestellten Stellen wird ein Schadenssignal in Form einer gedämpften Schwingung mit der Amplitude 1 und der Frequenz $f_0 = 35$ kHz sowie einer Güte $q = 20$ überlagert. Zum Zeitpunkt 0,025 sec wird zusätzlich eine weitere gedämpfte Schwingung (kein Schadenssignal) mit einer Grundfrequenz $F_0 = 800$ Hz überlagert.

Durch eine weitere Überlagerung von normal verteiltem Rauschen erhält man das im mittleren Schaubild dargestellte Gesamtschwingungssignal x(t), in welchem die zu detektierenden Kurzzeitereignisse 10 nicht mehr erkennbar sind.

Zur Analyse des Gesamtsignals x(t) wird nun gemäß der Erfindung die Musterfunktion g(t) gebildet, wobei $f_0 = 35$ kHz und der Parameter a = 5 gewählt wird. Das Gesamtsignal x(t) wird mittels des Analog/Digital-Wandlers 2 mit einer Abtastfrequenz fa von 350 kHz abgetastet. Das Schieberegister 3 besitzt N = 400 Zellen. Die Transformation F(tau) erfolgt im Berechnungszeittakt von 0,4 msec und liefert also 200 Funktionswerte der Transformationsfunktion F(tau). Das Ergebnis der Transformation ist im unteren Schaubild der Fig. 3 dargestellt, dem man die Beträge der Transformationsfunktion entnehmen kann. Die deutlichen Ausschläge mit der relativen Amplitude $2*10^{-4}$ im unteren Schaubild

korrelieren deutlich sichtbar sehr gut mit den Schadenssignalen 10 des oberen Schaubildes. Die zusätzliche gedämpfte Schwingung zum Zeitpunkt 0,025 sec beeinflußt das Ergebnis der Transformation nicht. Die Spitzenwerte der Transformationsfunktion sind als Folge gleicher Schadenssignale 10 auch gleich hoch.

**Patentansprüche**

1. Verfahren zur Auswertung von Schwingungssignalen technischer Systeme, wobei zunächst durch ein Aufnahmemittel das Schwingungssignal des betriebenen Systemes erfaßt wird, das Signal anschließend mittels einer Transformationsfunktion transformiert wird, die eine komplexe Musterfunktion enthält, welche aus der Impulsantwort des Systems gebildet ist, wobei zur Bewertung der Ähnlichkeit zwischen dem Schwingungssignal und der Musterfunktion die komplexe Musterfunktion durch eine komplexe Skalarproduktbildung mathematisch mit dem Schwingungssignal verknüpft wird, und aus dem Ergebnis der Transformation ein Schadensmerkmal des Systems ableitbar ist.

2. Verfahren nach Anspruch 1, dadurch gekennzeichnet, daß die Musterfunktion in einer Lernphase durch impulsartige Einwirkung auf das System, Aufnahme und Auswertung des Signals der dadurch bewirkten gedämpften Schwingung gewonnen wird.

3. Verfahren nach Anspruch 2, dadurch gekennzeichnet, daß die Musterfunktion durch impulsartige externe Einwirkung gewonnen wird.

4. Verfahren nach Anspruch 3, dadurch gekennzeichnet, daß die Musterfunktion bei Stillstand des Systems durch ausschließlich externe Einwirkung gewonnen wird.

Zeit [s]

Fig. 1

Fig. 2

Fig. 3